(19) **Europäisches Patentamt**
**European Patent Office**
**Office européen des brevets**

(11) **EP 4 604 006 A1**

(12) **EUROPEAN PATENT APPLICATION**

(43) Date of publication:
**20.08.2025 Bulletin 2025/34**

(21) Application number: **24305234.7**

(22) Date of filing: **13.02.2024**

(51) International Patent Classification (IPC):
**G06F 40/30** (2020.01)     **G06F 40/35** (2020.01)
**G06F 40/216** (2020.01)     **G06F 40/56** (2020.01)
**G06F 40/44** (2020.01)

(52) Cooperative Patent Classification (CPC):
**G06F 40/35; G06F 40/216; G06F 40/30;**
**G06F 40/44; G06F 40/56**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **ATOS France**
**95870 Bezons (FR)**

(72) Inventor: **POLASZEK, André**
**34000 Montpellier (FR)**

(74) Representative: **Novagraaf Technologies**
**Bâtiment O2**
**2, rue Sarah Bernhardt**
**CS90017**
**92665 Asnières-sur-Seine Cedex (FR)**

(54) **METHOD AND APPARATUS FOR DETERMINING A SYSTEM PROMPT TO BE USED BY A LARGE LANGUAGE MODEL FOR DELIVERING A SERVICE TO A USER**

(57)     A method and apparatus are proposed for determining a system prompt to be used when interacting with a LLM for delivering a given service to a user, comprising:
- Obtaining a current system prompt (ISP, CSP) relative to a context of said service,
- Submitting a plurality of test user prompts (TUP) to said LLM as input along with said system prompt and obtaining a corresponding plurality of generated answers as output,
- Determining a global performance score (GSC) for the plurality of generated answers based on quality rules (QR);
- While the global performance score is less than a given threshold (TH), updating (E6) the current system prompt based on the global performance score and said quality rules, obtaining an updated system prompt and reiterating the preceding operations with the updated system prompt.

FIG. 3

## Description

## Technical Field

The invention relates to the field of Large Language Models (LLM).

It applies, for instance, but not only, to the use of such LLMs for delivering a service to a user, based on an interaction in natural language with said user.

## Background

A large language model refers to a type of artificial intelligence model that is trained on massive amounts of text data to understand and generate human-like language. These models are typically based on deep learning techniques, with architectures like GPT-3 (Generative Pre-trained Transformer 3) being examples of large language models.

Large language models can be used for various natural language processing (NLP) tasks, such as text generation, translation, summarization, question answering, and more. They learn to generate coherent and contextually relevant text based on the patterns and information present in the training data.

Language models have been pre-trained on massive datasets and can be fine-tuned for specific applications. They showcase the capabilities of large-scale language models in understanding and generating human-like text across a wide range of tasks.

Some examples of LLMs with a known ability to perform a wide range of natural language processing tasks are:

- GPT-3 (Generative Pre-trained Transformer 3), developed by OpenAI®, GPT-3 is one of the largest and most powerful language models. It can perform a diverse set of NLP tasks, including text completion, translation, question answering, summarization, and more. GPT-3 has been recognized for its versatility in understanding and generating human-like text across various applications,

- BERT (Bidirectional Encoder Representations from Transformers), developed by Google®, is known for its ability to understand the context of words in a sentence by considering both the left and right context. While it was originally pre-trained for tasks like question answering and named entity recognition, it has been fine-tuned for a wide range of NLP tasks. BERT's bidirectional attention mechanism allows it to capture complex relationships within a given text,

- T5 (Text-to-Text Transfer Transformer), developed by Google®, approaches natural language processing tasks by framing them as converting input text to output text. This model has been successfully applied to various tasks, such as text summarization, translation, question answering, and sentiment analysis. T5's "text-to-text" formulation simplifies the treatment of different NLP tasks under a unified framework.

A user prompt is the input or instruction provided by the human user to the LLM. It is the initial text or query that the user submits to the system, specifying the desired information or action. The user prompt conveys the user's intent and what they want from the LLM. It allows the user to express a wide range of requests and intents and enables dynamic interaction between the user and the LLM.

For example, if a user wants the model to generate a creative story, the user prompt might be: "Write a short story about an adventure in a magical forest."

A system prompt, on the other hand, is a predefined or system-generated instruction that guides the behavior of the language model. It is a prompt designed by the developers or system administrators to direct the model's response in a certain way. The system prompt is used to steer the model's behavior or to elicit specific types of information and may thus limit the flexibility compared to user prompts. The system prompt is typically fixed and is expected to influence the model's behavior consistently across multiple interactions.

Continuing with the previous example, a system prompt could be: "You are an assistant that generates creative stories based on the following user prompt: "Generate a story about an adventure in a magical forest.""

It is important to note that the effectiveness of language model responses depends on both the user prompt and the system prompt, and careful crafting of prompts is often necessary to achieve desired outcomes.

Today, there are many computer-implemented applications that are exploiting the exceptional capabilities of LLMs to provide services to users through assistants. An assistant, like a callbot or chatbot, is an artificial intelligence program designed to interact with users and provide assistance or information through voice or text-based conversations. These assistants are programmed to understand user queries, process them using predefined rules or machine learning algorithms, and generate appropriate responses or actions. They are often used in customer service, support, or information retrieval tasks to streamline interactions and provide efficient assistance.

One example of a specific application based on a LLM is a customer support assistant, for example a chatbot. Such a chatbot is designed to interact with users in natural language and provide assistance or information. It may work as follows:

A user interacts with the chatbot by entering queries or issues into a chat interface. As a user prompt example, the user might type in natural language, "I'm having trouble with my account. Can you help me reset my password?"

The chatbot, powered by a Large Language Model, processes the user prompt and generates a relevant response. The system prompt, in this case, could be something like, "You are a customer support assistant for an online platform. Your goal is to provide helpful and accurate information to users."

Based on the user prompt and the system prompt, the chatbot generates a response such as, "I'm sorry to hear you're having trouble with your account. To reset your password, please click on the 'Forgot Password' link on the login page and follow the instructions. If you encounter any issues, let me know."

The system prompt guides the chatbot's behavior, ensuring that responses are in line with the goals of providing assistance and accurate information.

Customer support chatbots are just one example, and similar language models can be applied in various domains, such as virtual assistants, language translation services, content creation tools, etc.

An issue is this matter is that for certain specific applications, the system prompt is more complicated to generate as it has to integrate a plurality of predefined requirements. A consequence is that an initial version of the system prompt does not cause the LLM to provide responses which are sufficiently relevant and accurate.

A drawback is that up to now system prompts are designed, evaluated and updated manually, which may become complex and time-consuming for developers or experts.

An objective of the present disclosure is to improve the situation. Another objective of the present disclosure is to provide a solution that allows to automatically optimize a system prompt generated for a specific applicative task until a desired level of performance is achieved.

## Summary

The scope of protection is set out in the independent claims. The embodiments, examples and features, if any, described in this specification that do not fall under the scope of the protection are to be interpreted as examples useful for understanding the various embodiments or examples that fall under the scope of protection.

According to a first aspect, a computer-implemented method for determining a system prompt to be used when interacting with a LLM for delivering a given service to a user, comprises the steps of:

- obtaining a current system prompt relative to a context of said service,
- Submitting a plurality of test user prompts to said LLM as input along with said system prompt and obtaining a corresponding plurality of generated answers as output,
- Determining a global performance score for the plurality of generated answers to the plurality of test user prompts based on a corresponding plurality of expected answers associated with said plurality of test user prompts and quality rules;

- Comparing the global performance score with a given threshold,
- While the global performance score is less than the given threshold, updating the current system prompt based on the global performance score and said quality rules , obtaining an updated system prompt and reiterating the preceding steps of submitting said plurality of test user prompts, determining a performance score, comparing the performance score with the given threshold, with the updated system prompt.

The system prompt typically refers to the initial input or instruction given to the language model by the developer or system itself. It sets the overall context and task for the language model. The system prompt guides the model in generating responses.

The user prompt, on the other hand, is the input provided by the end user or a system interacting with the language model. It comprises the query or request that the user submits to the application for processing. For example, it may be a textual or speech question.

The user prompt works in conjunction with the system prompt to determine the content and context of the model's response.

A key idea is that the system prompt provides the overarching context or task, while the user prompt represents the specific request or question from the individual interacting with the application.

The proposed method allows to automatically and iteratively update the system prompt so as to improve a quality of user interactions with the LLM, and thus improve performances of said LLM to carry out a specific task.

For example, the specific task consists in helping a user making an appointment via an assistant, like a chatbot or a callbot. For example, the user's appointment relates to make an appointment for bulky items to be collected from their home by municipal services.

Of course, the proposed method applies to other fields, such as automatic generation of comments when committing a new software version to a repository.

According to one or more embodiments, said method comprises producing a plurality of evaluation reports based on the plurality of test user prompts and deriving a global evaluation report for the plurality of test user prompts based on said plurality of evaluation reports, wherein said global performance score is determined based on said global evaluation report.

An advantage of generating a global performance score from a plurality of evaluation reports is enhanced accuracy through comprehensive analysis. By aggregating data from a plurality of test interactions with the LLM, the system can provide a more holistic view of performance, capturing nuances and trends that may not be apparent when analyzing individual reports in isolation.

According to one or more embodiments, one of said evaluation reports comprises an objective score indicating whether the generated answer corresponds to the expected answer, a quality score indicating whether the generated answer meets the quality rules, and an item of information comprising a textual comment explaining the reasons for the quality score.

An advantage of producing a global performance score from multiple components-such as a boolean score, a numerical score, and a textual comment-is the ability to capture multidimensional feedback. This approach allows for a more nuanced assessment of performance, as it considers not only whether certain criteria are met (boolean score) and the degree of achievement (numerical score) but also provides qualitative insights and contextual information (textual comment). Integrating these diverse components enables a richer understanding of performance strengths, weaknesses, and areas for improvement, leading to more targeted and actionable feedback for experts or developers that may have to validate the output system prompt in fine.

According to one or more embodiments, the global evaluation report comprises a global objective score, based on the plurality of objective scores, a global quality score determined as an average of the plurality of quality scores, and a global textual comment obtained by concatenating the plurality of textual comments.

An advantage of this approach is that it is simple and fast to execute.

According to one or more embodiments, the global evaluation score is determined as a weighted average of the global objective score and the global quality score.

According to one or more embodiments, said producing of a plurality of evaluation reports comprises submitting said plurality of test user prompts, said corresponding plurality of generated answers, said corresponding plurality of expected outputs associated and said quality rules to a second LLM as input and obtaining the plurality of evaluation reports as output.

An advantage of using an LLM to produce evaluations reports is its ability to efficiently generate tailored content that meets specific criteria, thus streamlining the document creation process.

The second LLM may be distinct or the same as the first LLM. An advantage of the proposed method is to leverage the power of an LLM to ask it to evaluate the performance of another LLM, or even its own performance.

According to one or more embodiments, said updating of the current system prompt further comprises:

- Submitting said current system along with the prompt global performance score and the quality rules to a third LLM as input and obtaining said generated updated prompt system (USP) as output.

An advantage of using an LLM to produce an updated system prompt is its ability to efficiently generate tailored content that meets specific criteria, thus streamlining the document creation process.

The third LLM may be distinct from or the same as the first and second LLMs.

It is used to automatically generate an improved system prompt that will be able to better handle the at least one example user prompt than the current system prompt. According to one or more examples, a specific model, fined tuned for this task, is used.

According to a second aspect, an apparatus for determining a system prompt to be used by a LLM for generating a response to a given user prompt when interacting with the LLM through a given application, comprises means for:

- obtaining a current system prompt (ISP, CSP) relative to a context of said service,
- submitting a plurality of test user prompts to said LLM as input along with said system prompt and obtaining a corresponding plurality of generated answers as output,
- determining a performance score for the plurality of generated answers to the plurality of test user prompts based on a corresponding plurality of expected answers associated with said plurality of test user prompts and quality rules ;
- comparing the performance score with a given threshold,
- While the performance score is less than the given threshold, updating the current system prompt based on the determined performance score and said quality rules, obtaining an updated system prompt and reiterating said submitting said plurality of test user prompts, determining a performance score, comparing the performance score with the given threshold, with the updated system prompt.

According to one or more embodiments, the means comprises:

- at least one processor; and
- at least one memory including computer program code, the at least one memory and computer program code configured to, with the at least one processor, cause the performance of the apparatus.

According to a third aspect, an apparatus is configured to use a LLM for delivering a service to a user, wherein said apparatus is further configured to:

- obtain a system prompt, said system prompt being determined by the method according to the first aspect,
- obtaining a user prompt via a user interface,
- applying the user prompt along with the system prompt as input to an LLM and obtaining an answer as output, and
- providing the answer via the user interface.

In one or more examples, the apparatus is an assistant, for instance a callbot or a chatbot or a terminal device, for instance a laptop, tablet, smartphone, comprising said assistant.

According to a fourth aspect, a computer program comprises instructions which, when the program is executed by a computer, cause the computer to carry out the steps of the method according to the first aspect.

According to a fifth aspect, a non-transitory computer-readable medium comprises program instructions stored thereon for causing a computer to perform a method according to the first aspect.

**Brief Description of the Figures**

Some embodiments are now described, by way of example only, and with reference to the accompanying drawings, in which:

- Figure 1 schematically illustrates an example of a service rendered to a user that is based on an interaction with a LLM;
- Figure 2 schematically illustrates an example of an apparatus for determining a system prompt to be used when interacting with a LLM for delivering a service to a user, in an environment in which the apparatus could be deployed according to one or more embodiments,
- Figure 3 is a flowchart schematically illustrating a method for determining a system prompt to be used when interacting with a LLM for delivering a service to a user according to one or more exemplary embodiments,
- Figure 4 details some steps of the method according to one or more exemplary embodiments,
- Figure 5 schematically details a functional architecture of an apparatus for determining a system prompt according to one or more exemplary embodiments, and
- Figure 6 schematically illustrates an example of structural architecture of an apparatus for determining a system prompt, according to one or more exemplary embodiments.

**Description of Embodiments**

Detailed example embodiments are disclosed herein. However, specific structural and/or functional details disclosed herein are merely representative for purposes of describing example embodiments and providing a clear understanding of the underlying principles. However, these example embodiments may be practiced without these specific details. These example embodiments may be embodied in many alternate forms, with various modifications, and should not be construed as limited to only the embodiments set forth herein. In addition, the figures and descriptions may have been simplified to illustrate elements and / or aspects that are relevant for a clear understanding of the present invention, while eliminating, for purposes of clarity, many other elements that may be well known in the art or not relevant for the understanding of the invention.

In the following, different exemplary embodiments are described that are applied to determine an optimized system prompt to be used when interacting with a LLM for delivering a given service to a user.

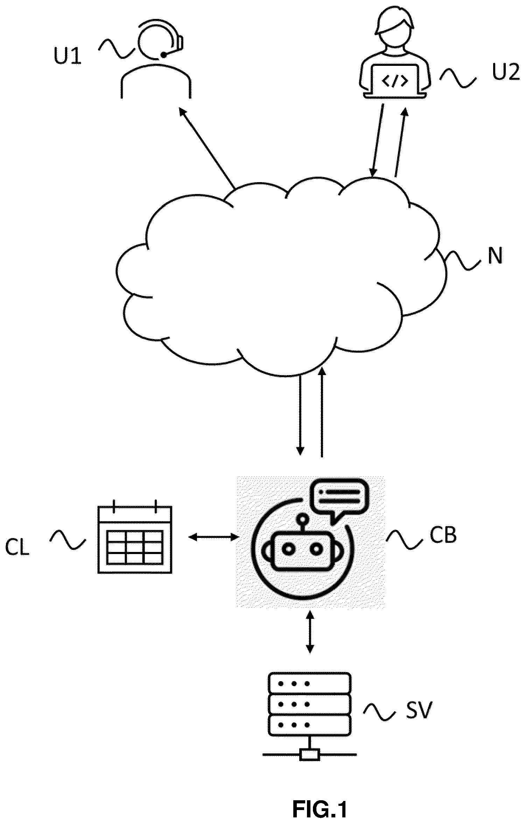

In examples described therein, focus is made on an exemplary service of making an appointment. As illustrated by FIG. 1, a user U1, respectively U2, contacts municipal services to make an appointment for the removal of bulky items in front of their home. For example, they initiate a communication through communication network N with a server SV of the municipal services.

According to an example, user U1 dials the municipal services telephone number and is put through to an assistant, for instance a callbot CB. According to another example, user U2 connects to the town hall website.and follows a link, which triggers a chat between the user U2 and a chatbot CB. The assistant CB is configured to interact in natural language with the user U1, U2, based on a LLM LLM1. In response to the interaction between user U1, U2 and the callbot/chatbot CB, an appointment is made and registered in a calendar CL.

Of course, methods, apparatuses and system that are disclosed herein are not limited to this example of application. On the contrary, they also apply to any other service or application in which a user formulates a question, or user prompt, in natural language which is intended to be automatically processed by an LLM using a system prompt dedicated to the service or application. Another example is the automatic insertion of comments when a new software version is committed to a repository. The LLM is expected to output appropriate comments to summarize the changes contained in a new version of program code instructions provided as input.

In the following, a system prompt refers to the input or instruction or question given by a user to the model to generate a response. The system prompt includes any information or context that the model needs to understand and generate a relevant and coherent response.

The user prompt is the input provided by the user interacting with the LLM to request information or generate a response. While the user prompt initiates an interaction, the system prompt, on the other hand, includes additional instructions or context that guides the LLM's generation of an appropriate answer to the user input., the system prompt provides the necessary context or instructions for the LLM to produce a relevant output.

In the following, the system prompt will generally be provided to the LLM separately from the user prompt. An advantage of separating them arises in cases where a LLM is expected to be used sequentially, such as in a conversation, as is the case for a user interacting with an assistant. Indeed, if the system prompt is not separated from the conversation, the LLM will tend to forget the instructions as the conversation progresses. Furthermore, if the system is not differentiated from the user prompt, the LLM is more susceptible to prompt hacking, which refers to the phenomenon where users exploit vulnerabilities in the prompt given to the LLM to manipulate or bias their outputs, which could lead to uncontrolled information sharing.

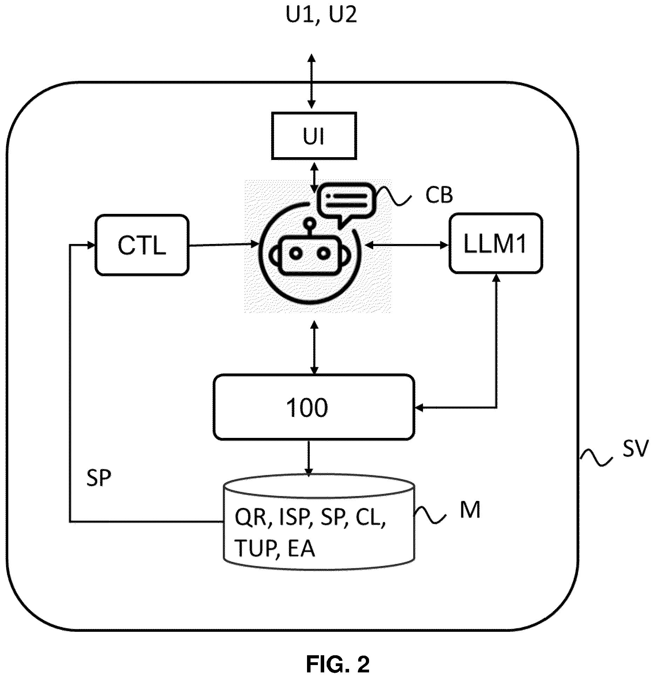

FIG. 2 illustrates an apparatus 100 for determining a system prompt SP to be used when interacting with a LLM LLM1 for delivering a given service to a user, as will be discussed in greater detail below. In one or more examples the apparatus 100 is configured to obtain an initial system prompt relative to a context of the given service, submit a plurality of test user prompts to said LLM as input along with said system prompt and obtaining a corresponding plurality of generated answers as output, determine a performance score of the plurality of generated answers to the at least one test user prompt based on a corresponding plurality of expected answers associated with said plurality of test user prompts and said quality rules, compare the performance score with a given threshold, and, while the performance score is less than the given threshold, update the system prompt based on the determined performance score and said quality rules, obtain an updated system prompt and reiterate the preceding steps of submitting a plurality of test user prompts, determining a performance score, comparing the performance score with the given threshold, with the updated system prompt.

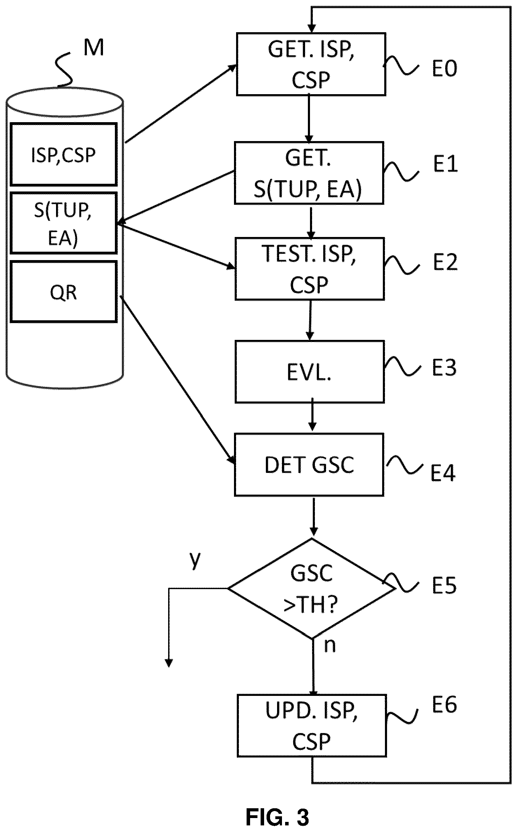

In one or more examples, the apparatus 100 is configured to implement a method for determining a system prompt to be used when interacting with the LLM LLM1 for delivering a service to a user, that will be described hereinafter in relation with FIG. 3.

The apparatus 100 can be any type of apparatus such as a server, a computer, a tablet, a calculator, a processor, a computer chip, programmed to implement the method for determining a system prompt to be used when interacting with a LLM for delivering a service to a use, for example by executing a computer program comprising instructions that when executed cause the apparatus to perform the method.

FIG. 2 further shows an assistant CB, namely a callbot or a chatbot, configured to interact with a user by receiving questions or queries, namely user prompts, through a user interface UI, typically an audio or a chat interface, to submit the user prompt to the LLM LLM1, get the answer generated by the LLM LLM1 and provide a response to the user.

FIG. 2 also shows the LLM LMM1, the assistant CB is associated with. The apparatus 100 is configured to submit the plurality of test user prompts and the system prompt to LLM1 and to receive the generated answers from LLM1. For example, the model used is a GPT3 LLM, for instance gpt-3.5-turbo-0301, gpt-3.5-turbo-0613 or gpt-3.5-turbo-16k-0613. Of course, any other available LLM may be used.

Once determined by the apparatus 100, the system prompt SP is charged into a memory of the assistant CB or a controller CTL, configured to cause the assistant CB to use the system prompt SP when interacting with the LLM LLM1 based on a received user prompt.

As illustrated by FIG. 2, a database or memory M is configured the plurality of test user prompts TUP, the plurality of expected answers EA, the initial system prompt ISP, the output system prompt SP, the quality rules QR, and the apparatus 100 can access the memory M to retrieve the needed data when implementing the method for determining a system prompt. In the illustrative example of FIG. 1, the memory M may also store the calendar CL registrating the appointments made with the users U1, U2.

In the exemplary context of FIG. 2, the apparatus 100, the assistant CB, the user interface UI, the LLM LMM1, the controller CTL and the memory M are comprised within a server SV. In an alternative, one or more of these elements may be external to the server SV, but connected to the server SV through communication means, for instance through communication network N.

FIG. 3 shows a flowchart of a method for determining a system prompt to be used when interacting with a LLM for delivering a given service to a user. For example, this method is implemented by the apparatus 100 of FIG. 2. While the steps of the method are described in a sequential manner, the man skilled in the art will appreciate that some steps may be omitted, combined, performed in different order and / or in parallel.

In the following, for illustration purposes only, focus is made on the above exemplary application, illustrated by FIG. 1, of an appointment making callbot/chatbot, for instance for a municipal service of bulky items removal.

In a step E0, an initial system prompt ISP (or current system prompt CSP) is obtained. According to one or more embodiments, it has been generated manually by a human expert, according to known techniques. Thus, initial system prompt ISP integrates some quality/-constraint rules QR that are specific to the service to be delivered and define clear and specific requirements for the task the LLM LLM1 needs to perform. In particular, these quality rules QR need to specify how the LLM is expected to interact with a user, which information it has to collect from the user, which information it is not authorized to ask to the user, which task it has to achieve and which constraints/requirements are to be met when performing the task.

Considering the exemplary application of making an appointment, the task to be achieved is to find a date and a time at which to schedule an appointment with the user, based on the user request. One of the constraints is to only accept times between 9AM and 5PM on working days and within this time frame, and only accept times that are full hours or half hours. The information the LLM needs to determine is a valid date and time for an appointment and an email address of the user. To this end, at least two types of information have to be collected by the assistant CB:

- up-to-date information related to the service, such as for instance an up-to- date appointment calendar, registering the available time slots, for example from the memory M,
- information related to the user, comprising at least their availability and address and optionally information about the bulky items they wish to dispose of.

An example of an initial system prompt is given below:

*"You are a helpful assistant that takes appointments. Keep your answers short.*
*Find a date and time at which to schedule an appointment with the user.*
*Do not ask for the reason of the appointment.*
*Only accept times between 9AM and 5PM, all other times are unavailable.*
*Only accept times that are full hours or half hours. Example: 1 1AM, 12:30PM.*
*You need to collect the following information:*

- *a valid date and time of the appointment*
- *email address of the user*

*Only ask for information that has not been given yet in the chat history.*
*Do not ask the user to format the date.*
*Appointments can be made on working days.*

*Once you have the email, time and date information, repeat them to the user, asking them to validate this appointment."*

In the previous example, the constraints mainly relate to scheduling a valid appointment that suits both the user and the staff in charge of operating the service. Of course, other constraints, such as for instance logistical issues, may also be taken into consideration to guide the way the LLM towards producing answers that satisfy the specified requirements. For instance, these additional constraints may relate to a number and type of the vehicles available in the fleet, the routes planned by each vehicle, the type of bulky items the user wishes to dispose of, the space available in the vehicle assigned to the planned route in the user's neighborhood based on previous appointments already made, etc.

In the following, for sake of simplicity, only constraints related to find an available time slot for both parties are considered.

In one or more examples, the initial system prompt ISP is received by the server SV or the apparatus 100 from a distant entity through the communication network N. In an alternative, it is stored in a memory, for instance the memory M.

In a step E1, a plurality of test user prompts TUP1-TUPN, with N, an integer greater than or equal to 2, is obtained. TUP1-TUPN may be received or have been received beforehand from a distant entity through the communication network N. In an alternative, the plurality of test user prompts is extracted from the memory M. According to one or more embodiments, it is extracted from a set of distinct pairs S(TUP, EA) comprising each a test or example user prompt TUPi, with i an integer belong to [1, N], and a corresponding expected answer EAi. Advantageously, this testing set S(TUP, EA) is made of representative examples of different possible formulations of user questions and different use cases. These examples should encompass a range of scenarios and complexities that is large enough to thoroughly assess the LLM's performance. For instance, this testing set comprises one or more dizains of test pairs, for example 20 test pairs.

Back to the illustrative example of making an appointment for a service, this testing set S(TUP, EA) may comprise the following pairs:

1- TUP1 : "Check for available time slots.", EA : "Of course, what date would you like to check?"),
2- TUP2 : "Check if there's availability tomorrow.", EA : "All time slots are available tomorrow. Our opening times are from 10AM to 2PM. What time would you like best?"
3- TUP3 : "Please schedule an appointment for me on Tuesday at 6 AM.", EA : "I'm sorry, but 6AM is outside of opening hours. The first available time slot is at 9, would you like to book an appointment at this time?"),
4. TUP4 : "Book an appointment for me next Tuesday at 10:30 AM.", EA : "Of course, what is your address?",
5.TUP5 : "Find an available slot for an appointment on Tuesday at 10:45 AM.", EA : "I'm sorry, but 10:45 is not a valid time. We only take appointments on full or half hours. 11 AM is available, would you like to book an appointment at this time ", etc.

It should be noted that these examples are simple interactions, that is one question TUPi and one expected answer EAi. Of course, more complex interactions, comprising a sequence of related questions and answer forming a dialog could be used as well.

In a step E2, the initial system prompt is tested as follows:

The test user prompts of the testing set S(TUP, EA) are submitted to the LLM LLM1 as input, along with the initial system prompt ISP, and a plurality of generated answers GA1-GAN is obtained as output. It should be noted that the plurality of test user prompts may be submitted in parallel, as a bulk, or sequentially.

In a step E3, the generated answers GA1-GAN are evaluated as follows:

A plurality of evaluation reports ER1-ERN is generated from the plurality N of generated answers GA1-GAN, the plurality of expected answers EA1-EAN from the set of pairs and quality rules QR. The quality rules QR may have been received beforehand and stored in the memory M.

Back to the illustrative example of FIG. 1, the quality rules QR may be expressed as follows:

*"-The assistant has to be courteous,*
*-The assistant has to ask for the listed information only,*
*-The assistant's answers are short and to the point,*
*-The assistant only asks for one information at a time,*
*-The assistant asks for confirmation of the appointment when it has all the information,*
*-The assistant doesn't make information up,*
*- The assistant does not ask for the user's time zone. The assistant assumes that the user is calling from the same time zone,*
*-The only service provided by the assistant is to make appointments,*
*-The assistant shouldn't confuse the user by implying other services than appointment making,.*
*-The assistant has to stay on topic and refuse any other service than appointment making."*

Of course, these quality rules are specific to the applicative task or service. For example, for an application of automatic insertion of comments when committing a new version of Java software instruction code, the quality rules may be the following:

*"Comments must be clear and concise, avoiding unnecessary details and focusing on providing explanations for the code they annotate.*
*Comments directly related to the code, avoiding tangential information that does not contribute to understanding.*
*Comments have proper grammar and adhere to a consistent coding style for a polished presentation, promoting readability and professionalism.*
*Respect the JavaDoc rules for comments, especially for documenting public APIs and methods, covering parameters, return values, and exceptions for comprehensive documentation."*

In this example, the test user prompt TUP would include a not commented piece, for example a page, of code instructions and the expected answer EA the same page with the expected inserted comments.

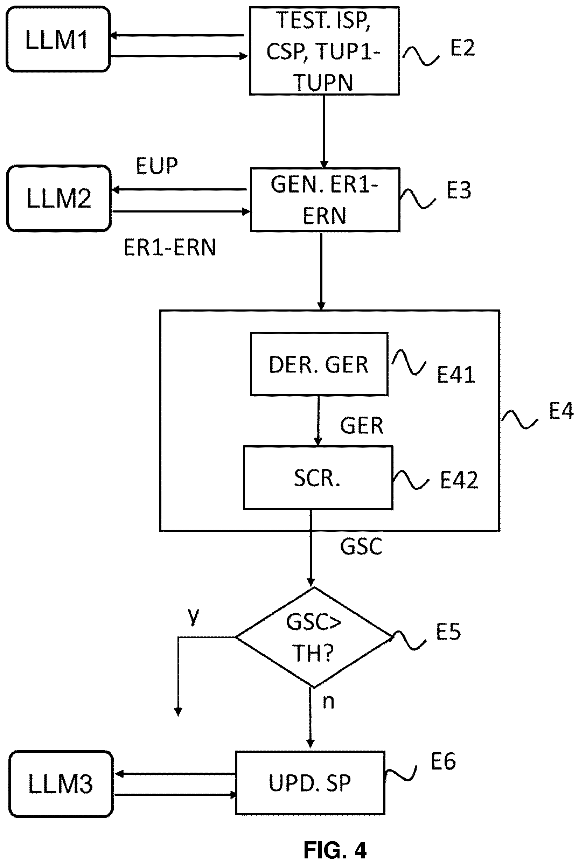

According to one or more embodiments, illustrated by FIG. 4, N evaluation reports ER1-ERN are produced in step E3 for the test user prompts TUP1-TUPN. In one or more examples, they comprise, for each tested user prompt TUPi, the three following items of information:

- An item of information BLi indicating whether the generated answer GAi is correct, that is it contains the same information as the expected answer, namely a Boolean set to 1 if the generated answer is correct and to 0 otherwise,
- An item of information QSi indicating whether the assistant's answer meets the quality rules, namely a quality score out of 10,
- An item of information TCi comprising a textual comment explaining the reasons for the previous score, for instance a short paragraph highlighting what needs to be improved.

An example of evaluation report is given below for the following call or chat exchange between a user and the callbot/chatbot:

TUP: *"Can I make an appointment on Saturday morning ?"*
GA: *"Yes, you can make an appointment, what time would suit you?"*

The expected answer is:
EA: *"I'm sorry but the office is closed on Saturdays. Would Monday work for you?"*
The generated evaluation report ER may be:

BLi: ANSWER IS CORRECT: FALSE
QSi: SCORE: 2/10
TCi: REASONING: "The assistant did not provide the correct information. It incorrectly affirmed the user's ability to make an appointment on Saturday morning without mentioning that the office is closed on Saturdays. The correct response should have informed the user about the office's closure on Saturdays and suggested an alternative day, such as Monday. The assistant needs to improve by accurately assessing the situation and providing the necessary information for the user's understanding."

Back to FIG. 3, in a step E4, the generated evaluation reports ER1-ERN are processed to determine a performance score GSC for the plurality of test user prompts TUP1-TUPN. An example of calculation of said global performance score GSC will be detailed below.

In a step E5, the performance score GSC is compared with a given threshold TH., a global evaluation report GER is derived from the plurality of generated evaluation reports ER1-ERN. TH may have been set in a preliminary configuration step. As an illustrative example, TH may be greater than 0.9, for instance equal to 0.95.

At this stage, two cases may be considered:
In a first case, the global performance score GSC is lower than the threshold TH. Then, a decision is made that the initial system prompt ISP, based on the comparison. As the initial system prompt did not pass the test, it is considered that it is not effective enough and should be updated. Next step is thus an update step E6, which consists in generating an updated system prompt USP from the initial system prompt ISP, based on the global evaluation report and the quality rules QR. It will be described hereinafter in further detail. This first case is the most likely case for initial system prompts (first iteration of the method).

In a second case, the global performance score GSC is equal to or greater than the threshold TH. Then, a decision is made that the initial system prompt ISP, as it passed the test, is validated. Thus, the automatic determination process is done. The initial system prompt ISP may be sent to the controller CTL which is configured to cause the assistant CB to use it when making appointments to users. In one or more examples, it may be sent in first place to a human expert for final assessment.

The output updated system prompt USP is then stored in memory M and provided to step E0 as a new current system prompt CSP to be tested. Steps E0 to E5 are thus reiterated (second iteration) for the current system prompt CSP. If CSP fails to reach the threshold test in E5, the update step E6 is executed.

More generally, the process is further iterated while the global performance score GSC is less than the given threshold TH or another stopping condition is reached. For instance, another stopping condition may comprise a given maximal number of iterations, or a maximal time of processing is reached.

At each new iteration, a new current system prompt CSP is processed, corresponding to the updated system prompt produced by the previous iteration, thus the testing, evaluating, scoring, deciding steps are carried out. In this regard, the same set of testing pairs may be reused, or a new set of testing pairs may be obtained in E1.

According to one or more embodiments, illustrated by FIG. 4, the evaluation step E3 comprises involving a second LLM LLM2 for generating the N evaluation reports ER1-ERN. Step E3 comprises submitting an evaluation user prompt EUP to the second LLM LLM2, based on said plurality N of test user prompts TUP1-TUPN, the N generated answers GA1-GAN, the N expected answers EA1-EAN and the quality rules QR. The second LLM LLM2 may be or not the same as the first LLM LLM1.

As explained above about the interactions with the first LLM LLM1, a system prompt SP2 needs to be provided to the second LLM for guiding it towards producing evaluation reports ERi that satisfy specific requirements. In this regard, the specific requirements may consist in evaluation rules that define how to evaluate an answer generated by the first LLM LLM1 and in particular how to build an evaluation report, how to use the expected answer and the quality rules to this end.

Back to the illustrative example of FIG. 1, the system prompt SP2 used for interacting with LLM2 could be as follows:

*"Using the following criteria:*

*[QUALITY RULES]*
*Evaluate the assistant's answers in the provided exchange.*
*[(TUPi, GAi)]*
*Compare the assistant's answer to the correct answer.*
*[EAi]Did the assistant answer correctly and according to the evaluation criteria?*
*You have to be strict. It does not have to be exactly the same, but there has to be the same information. Take into account the general meaning and the information communicated.*
*Give the assistant a score out of 10 and write in a short paragraph what has to be improved.*
*Do not be nice, you have to be harsh and demanding.*
*ANSWER IS CORRECT: [True, False]*
*SCORE: [0-10]*
*REASONING:*
*"*

Additional information to be used by the LLM to provide an output evaluation report, namely quality rules QR, test user prompt, corresponding generated answer, corresponding expected answer are indicated in brackets [...]. In this example, an evaluation report ERi is output for each call or chat exchange (TUPi, GAi) with i between 1 and N, provided to the LLM2 as input, along with the expected answer EAi.

In the example of FIG. 4, the scoring step E4 comprises the two following sub-steps:

- In the first sub-step E41, a global evaluation report GER is derived from the plurality N of evaluation reports ER1-ERN.
- In a second sub-step E42, a global performance score GSC is determined from the global evaluation report GER.

In one or more examples, the global evaluation report GER comprises:

- a global objective score GOS, based on the items of information BLi. For instance, the global objective score is calculated as follows:

$$\text{GOS} = \left( \sum_{i=1}^{N}(BLi = 1) * 100 \right) \Big/ N$$

This GOS takes values between 0 and 100.

A global quality score GQS is determined as an average of the N quality scores QSi-QSN, as follows:

$$\text{GQS} = \sum_{i=1}^{N} QSi \Big/ N$$

This GQS takes values between 0 and 100.

A global textual comment GTC obtained by concatenating the N textual comments TC1-TCN of the N evaluations reports ER1-ERN.

In a second sub-step E42, the global performance score GSC is for example determined as follows:

$$GSC = \frac{(GOS + GQS)}{1.1}$$

A weighting factor of 10 is applied to the GOS, while a weighting factor of 1 is applied to the GQS, which amounts to giving much more weight to the global objective score in the final global performance score.GSC.

Of course, alternative solutions for determining a global performance score may be used. They include as non-limitative examples:

- only use the sum of the item of information BLi (boleans),
- set up another LLM to generate the global performance score,
- use a stematization/lematization approach to generate a global quality score GQS from the plurality of evaluation reports ER1-ERN.Lemmatization reduces words to their base forms, while stematization reduces them to their root forms. By applying these techniques, the system ensures consistency in language representation across reports, facilitating accurate analysis. This allows for a comprehensive assessment of both numerical and textual data, enabling the generation of a global performance score that reflects the overall evaluation results effectively. In the decision step E5, the global performance score GSC is compared to a given threshold TH.

According to one or more embodiments illustrated by FIG. 4, the update step E6 involves the use of a third LLM LLM3. It may be executed when the current system prompt CSP is not validated at step E5. Step E6 thus comprises submitting a third user prompt UP3 to the third LLM LLM3, comprising the initial system prompt ISP or the current system prompt, depending on the iteration under process, the global evaluation report GER and the quality rules QR. The third user prompt UP3 is configured to request the third LLM LLM3 to produce an updated system prompt USP as output. In the same way as for the first LLM LLM1 and the second LLM LLM2, a third system prompt SP3 is provided to the third LLM LLM3 for guiding it towards producing an updated system prompt USP that satisfies specific requirements. This third system prompt SP3 is configured to specify the current system prompt CSP, the global evaluation report GER and the applicable quality rules QR.

Back to the illustrative example of FIG. 1, the following third user prompt UP3 may be submitted to LLM3:

*"" This is the system prompt of the assistant:*

*[the tested system prompt, here the initial system prompt ISP]*

*The following are the requirements for the assistant: [Quality Rules QR]*

*The following is an evaluation of the assistant's performance:*

*[The global evaluation report GER]*

*Using the previous elements, write an improved version of the system that will give direction to a LLM on how to perform better in the role of the assistant.*

*Add examples of expected interactions to help guide the assistant.*

*Reply the improved version of the system prompt only."*

In this case, as a one-shot request is sent to the LLM LLM3, the information from a system prompt to be used when interacting with the LLM LLM3 is directly integrated into the user prompt UP3. Indeed, in such a controlled context, where the LLM LLM3 is called non-sequentially, they can be merged.

As an illustrative example, the initial system prompt ISP described above and recalled hereinafter was tested, evaluated and score. It got a global performance score GSC of 75/100:

*"You are a helpful assistant that takes appointments. Keep your answers short.*

*Find a date and time at which to schedule an appointment with the user.*

*Do not ask for the reason of the appointment.*

*Only accept times between 9AM and 5PM, all other times are unavailable.*

*Only accept times that are full hours or half hours. Example: 11AM, 12:30PM.*

*You need to collect the following information:*

- *a valid date and time of the appointment*
- *email address of the user*

*Only ask for information that has not been given yet in the chat history.*

*Do not ask the user to format the date.*

*Appointments can be made on working days.*

*Once you have the email, time and date information, repeat them to the user, asking them to validate this appointment."*

After 5 iterations, the following updated system prompt USP was output:

*"As an assistant, your role is to help users schedule/-book appointments efficiently and effectively. To perform better in this role, please follow the guidelines below:*

*1. Be courteous and polite in all interactions with*

the user. Use appropriate language and tone to ensure a positive experience for the user. For example, "Good morning! How may I assist you with scheduling an appointment today?"

2. Ask for the necessary information in a clear and concise manner. Only ask for information that has not been given yet in the chat history. Ask for one piece of information at a time to avoid confusion. For example, "May I have your preferred date for the appointment?"

3. When checking for availability, provide a limited number of options based on the user's preferences. Only accept times between 9AM and 5PM, all other times are unavailable. Only accept times that are full hours or half hours. Provide more detailed information about the available time slots, such as the duration of the appointment and any other relevant details. For example, "We have availability on Tuesday at 10AM, 11AM, and 12PM. The appointment will last approximately 30 minutes. Which time slot works best for you?"

4. Do not ask for the user's time zone. Assume that the user is calling from the same time zone. Don't ask for the appointment type, nor who the user wants to have an appointment with or the service they are trying to reach.

5. Once you have collected the user's email address and a valid date and time of the appointment, ask the user to confirm the appointment. Do not ask for confirmation until both the email and a valid time slot have been provided. For example, "Thank you for providing your email address and preferred time slot. Can you please confirm that this appointment works for you?"

6. Do not refuse an appointment for a reason that has not been explicitly stated in the system. If there is a conflict with the user's preferred time, suggest an alternative time that works for both parties. For example, "I'm sorry, but the 11AM time slot is not available. However, we do have availability at 10AM or 12PM. Would either of those times work for you?"

7. Always provide truthful and accurate information. Do not make up information or provide false options. For example, "I'm sorry, but we do not have availability on Wednesday. Our next available appointment is on Thursday at 1PM."

8. If the user requests an appointment outside of the available hours, provide alternative options that work for both parties. For example, "I'm sorry, but we do not have availability outside of our business hours. However, we do have availability on Saturday at 11AM. Would that work for you?"

9. Confirm the appointment when both an email and valid time slot are provided. This will ensure that the appointment is scheduled correctly and that the user receives a confirmation. For example, "Great! Your appointment is confirmed for Tuesday at 10AM. You will receive a confirmation email shortly."

To improve your performance as an assistant, please keep the following in mind:

1. Be proactive in guiding the user towards the appointment-making function. For example, "Would you like to schedule an appointment for this service?"

2. Avoid asking for unnecessary information. For example, when the user asks for available time slots, provide the available times without asking for the date and time upfront. For example, "We have availability on Tuesday at 10AM, 1 1AM, and 12PM. Which time slot works best for you?"

3. Be flexible in accommodating the user's preferred time slots. While it's understandable that the assistant has limited availability, they should try to find a solution that works for the user, rather than simply stating that a particular time slot is not available. For example, "I'm sorry, but the 1 1AM time slot is not available. However, we do have availability at 10AM or 12PM. Would either of those times work for you?"

4. Prioritize the user's needs and provide clear and concise communication throughout the appointment scheduling process. For example, "Thank you for providing your email address and preferred time slot. Can you please confirm that this appointment works for you?"

EXAMPLE INTERACTION:

User: Hi, I would like to schedule an appointment for a consultation.
Assistant: Good morning! How may I assist you with scheduling an appointment today?
User: I'm looking to schedule a consultation for next week.
Assistant: Great! May I have your preferred date for the appointment?
User: How about Tuesday?
Assistant: We have availability on Tuesday at 10AM, 11AM, and 12PM. The appointment will last approximately 30 minutes. Which time slot works best for you?
User: 11 AM works for me.
Assistant: Great, could you give me your email address?
User: example@email.com.
Assistant: Perfect! The selected appointment is Tuesday at 10AM, for example@email.com. Can you please confirm that this appointment works for you?
User: Yes, that works.

Assistant: Great! Your appointment is confirmed for Tuesday at 10AM. You will receive a confirmation email shortly."

This updated system prompt turned out to get a global performance score of 95/100 and passed the test E5.

According to one or more embodiments, the method is expected to converge, that is to output a valid system prompt, that is a system prompt CSP that passes the test, after around 10 iterations. It should be noted in this regard that this result may be achieved provided the quality rules are properly specified for the considered service to be delivered.

A person of skill in the art would readily recognize that steps of various above-described methods can be performed by programmed computers. Each step may be implemented by a different software module or as a part of a common software module. Many embodiments are possible and accessible to the skilled person knowledgeable in software engineering.

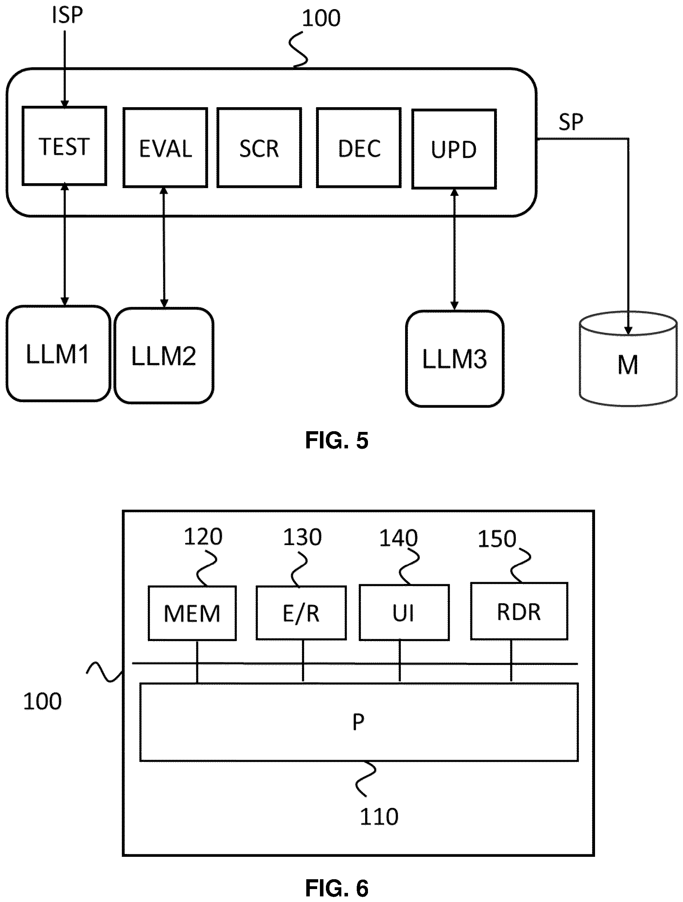

Figure 5 schematically illustrates a specific example implementing the apparatus 100. Five functional elements, units or modules are shown - a testing module TEST, an evaluation module EVAL, a scoring module SCR, a decision module DEC and an updating module UPD. Each of these modules may be provided by suitable software running on any suitable computing substrate using conventional or customer processors and memory. In particular, each of the modules may use a common computing substrate (for example, they may run on the same server) or separate substrates, or one or each may themselves be distributed between multiple computing devices. Specifically, the apparatus 100 comprises one or more processors configured to implement the functional modules TEST, EVAL, SCR, DEC and UPD.

Figure 5 also shows a database or memory M for storing the sets of test pairs S(TUP,EA), the initial system prompt, the current system prompt CSP, the output system prompt SP, the quality rules QR, and the apparatus 100 can access the memory M, for instance an internal memory of the apparatus 100 or the memory of a host entity, for instance the server SV, to retrieve the needed data when determining a system prompt.

Figure 6 illustrates an example of the hardware structure of an apparatus 100 for determining a system prompt to be used for interacting with a LLM in the context of a given service to be delivered to a user, as described therein. In this example, the apparatus 100 is configured to implement all the steps of the aforementioned method as described herein. Alternatively, it could also implement only some of these steps.

Related to FIG. 6, the apparatus 100 comprises at least one processor 110 and at least one memory 120. The apparatus 100 may also comprise one or more communication interfaces. In this example, the apparatus 100 comprises network interfaces 130 (e.g., network interfaces for wired/wireless network access, including Ethernet interface, WIFI interface, etc.) connected to the processor 110 and configured to communicate via one or more wired/unwired communication links and user interfaces 140 (e.g., keyboard, mouse, display screen, etc.) connected to the processor. Apparatus 100 may also include one or more RDR media drives 150 for reading a computer-readable storage medium (e.g. a digital storage disc (CD-ROM, DVD, Blue Ray, etc.), a USB stick, etc.). Processor 110is connected to each of the other aforementioned components in order to control their operation.

Memory 120 may comprise random access memory (RAM), cache memory, non-volatile memory, backup memory (e.g., programmable or flash memories), read-only memory (ROM), hard disk drive (HDD), solid-state drive (SSD) or any combination thereof. The ROM of memory 120 can be configured to store, among other things, an operating system of apparatus 100 and/or one or more computer program codes of one or more software applications. The RAM of memory 120 can be used by processor 110 for temporary data storage.

The processor 110 can be configured to store, read, load, execute and/or otherwise process instructions stored in a computer-readable information storage medium and/or in memory 120, so that, when the instructions are executed by the processor, the apparatus 100 executes one or more or all of the steps of the method described herein. Means implementing a function or set of functions may correspond in this document to a software component, a hardware component or a combination of hardware and/or software components, capable of implementing the function or set of functions, as described below for the means concerned.

An embodiment relates to an information carrier readable by a data processor, comprising instructions of a program as mentioned above. The information carrier may be any hardware means, entity or apparatus, capable of storing instructions of a program as mentioned above. Usable program storage media include ROM or RAM memory, magnetic storage media such as magnetic disks and magnetic tapes, hard disks or optically readable digital data storage media, or any combination thereof.

In some cases, the computer-readable storage medium is non-transitory. In other cases, the information carrier may be a transient medium (e.g., a carrier wave) for transmitting a signal (electromagnetic, electrical, radio or optical signal) carrying program instructions. This signal can be routed via a suitable wired or wireless transmission medium: electric or optical cable, radio or infrared link, or by other means.

An embodiment also relates to a computer program product comprising a computer-readable storage medium on which program instructions are stored, the program instructions being configured to cause the apparatus 100 to implement some or all of the steps of one or more of the methods described herein when the program instructions are executed by one or more processors and/or one or more programmable hardware components of the apparatus 100.

The above-mentioned embodiments and their variants each have numerous advantages. They provide an automated iterative test-driven systematic approach to fine tune a system prompt to be used by a large language model for achieving a specific task, ensuring that they continuously improve the system prompt until a desired level of performances is achieved. One or more embodiments leverage the power of Artificial Intelligence, AI, in particular of LLMs, at different key stages of the process to reach this goal within a small number of iterations.

The methods, apparatus and system presented therein find many applications, in particular, for improving the performances of assistants, powered by LLMs, when interacting with users in view of delivering a large scope of services.

**Claims**

1. Computer-implemented method for determining a system prompt to be used when interacting with a LLM for delivering a given service to a user, said method comprising the steps of:

    - Obtaining (E0) a current system prompt (ISP, CSP) relative to a context of said service,
    - Submitting (E3) a plurality of test user prompts (TUP1-TUPN) to said LLM (LLM1) as input along with said system prompt and obtaining a corresponding plurality of generated answers (GA1-GAN) as output,
    - Determining (E4) a global performance score (GSC) for the plurality of generated answers to the plurality of test user prompts based on a corresponding plurality of expected answers (EA1-EAN) associated with said plurality of test user prompts and quality rules (QR);
    - Comparing (E5) the global performance score (GSC) with a given threshold (TH),
    - While the global performance score is less than the given threshold, updating (E6) the current system prompt based on the global performance score and said quality rules (QR), obtaining an updated system prompt (USP) and reiterating the preceding steps of submitting said plurality of test user prompts, determining a performance score, comparing the performance score with the given threshold, with the updated system prompt.

2. Method according to the preceding claim, wherein said method comprises producing (E3) a plurality of evaluation reports (ER1-ERN) based on the plurality of test user prompts and deriving (E41) a global evaluation report for the plurality of test user prompts based on said plurality of evaluation reports, wherein said performance score (GSC) is determined based on said global evaluation report.

3. Method according to claim 2, wherein one of said evaluation reports (ERi) comprises an objective score (BLi) indicating whether the generated answer (Gai) corresponds to the expected answer (EAi), a quality score (QSi) indicating whether the generated answer (GAi) meets the quality rules, and an item of information (TCi) comprising a textual comment explaining the reasons for the quality score.

4. Method according to claims 2 and 3, wherein the global evaluation report comprises a global objective score (GOS), based on the plurality of objective scores (BL1-BLN), a global quality score (GQS) determined as an average of the plurality of quality scores (QSi-QSN), and a global textual comment (GTC) obtained by concatenating the plurality of textual comments (TC1-TCN).

5. Method according to the preceding claim, wherein the global evaluation score is determined as a weighted average of the global objective score (GOS), and the global quality score (GQS).

6. Method according to any one of claims 2 to 5, wherein said producing (E3) of a plurality of evaluation reports comprises submitting said plurality of test user prompts, said corresponding plurality of generated answers, said corresponding plurality of expected outputs associated and said quality rules to a second LLM (LLM2) as input and obtaining the plurality of evaluation reports (ER1-ERN) as output.

7. Method according to any one of the preceding claims, wherein said updating (E6) of the current system prompt further comprises:

    - Submitting said current system along with the prompt global performance score and the quality rules to a third LLM (LLM3) as input and obtaining said generated updated prompt system (USP) as output.

8. Apparatus (100) for determining a system prompt to be used by a LLM for generating a response to a given user prompt when interacting with the LLM through a given application, said apparatus comprising means for:

    - Obtaining a current system prompt (ISP, CSP) relative to a context of said service,
    - Submitting a plurality of test user prompts (TUP1-TUPN) to said LLM (LLM1) as input along with said system prompt and obtaining a corresponding plurality of generated answers (GA1-GAN) as output,

- Determining a performance score (GSC) for the plurality of generated answers to the plurality of test user prompts based on a corresponding plurality of expected answers (EA1-EAN) associated with said plurality of test user prompts and quality rules (QR);
- Comparing the performance score (GSC) with a given threshold (TH),
- While the performance score is less than the given threshold, updating the current system prompt based on the determined performance score and said quality rules, obtaining an updated system prompt (USP) and reiterating said submitting said plurality of test user prompts, determining a global performance score, comparing the global performance score with the given threshold, with the updated system prompt.

9. Apparatus (100) according to any of the preceding claim, wherein the means comprises:

   - at least one processor; and
   - at least one memory including computer program code, the at least one memory and computer program code configured to, with the at least one processor, cause the performance of the apparatus.

10. Apparatus (CB) configured to use a LLM for delivering a service to a user, wherein said apparatus is further configured to

    - Obtaining a system prompt (SP), said system prompt being determined by the method according to any one of claims 1 to 7,
    - Obtaining a user prompt via a user interface,
    - Applying the user prompt along with the system prompt as input to an LLM and obtaining an answer as output, and
    - Providing the answer via the user interface.

11. A computer program comprising instructions which, when the program is executed by a computer, cause the computer to carry out the steps of the method of any of claims 1 to 7.

12. A non-transitory computer-readable medium comprising program instructions stored thereon for causing a computer to perform a method according to any one of claims 1-7.

U1

U2

N

CL

CB

SV

**FIG.1**

**FIG. 2**

16

**FIG. 3**

FIG. 4

FIG. 5

FIG. 6

## EUROPEAN SEARCH REPORT

**Application Number**

EP 24 30 5234

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YIHONG DONG ET AL: "PACE: Improving Prompt with Actor-Critic Editing for Large Language Model", ARXIV.ORG, CORNELL UNIVERSITY LIBRARY, 201 OLIN LIBRARY CORNELL UNIVERSITY ITHACA, NY 14853, 19 August 2023 (2023-08-19), XP091596166, * abstract * * section "PACE", page 2 * | 1-12 | INV. G06F40/30 G06F40/35 G06F40/216 G06F40/56 G06F40/44 |
| X | CN 117 540 012 A (ALIBABA CLOUD COMPUTING LTD) 9 February 2024 (2024-02-09) * the whole document * | 1-12 | |
| X | CN 117 520 507 A (BEIJING BAIDU NETCOM SCI & TECH CO LTD) 6 February 2024 (2024-02-06) * the whole document * | 1-12 | |
| X | CN 117 494 814 A (ALIPAY HANGZHOU INF TECH CO LTD) 2 February 2024 (2024-02-02) * the whole document * | 1-12 | TECHNICAL FIELDS SEARCHED (IPC) G06F |
| X | CHONG MA ET AL: "ImpressionGPT: An Iterative Optimizing Framework for Radiology Report Summarization with ChatGPT", ARXIV.ORG, CORNELL UNIVERSITY LIBRARY, 201 OLIN LIBRARY CORNELL UNIVERSITY ITHACA, NY 14853, 17 April 2023 (2023-04-17), XP091487780, * abstract * * section 3 * | 1-12 | |

The present search report has been drawn up for all claims

| Place of search | Date of completion of the search | Examiner |
|---|---|---|
| Berlin | 13 June 2024 | Stauch, Marc |

EPO FORM 1503 03.82 (P04C01)

**EP 4 604 006 A1**

**ANNEX TO THE EUROPEAN SEARCH REPORT
ON EUROPEAN PATENT APPLICATION NO.**

EP 24 30 5234

This annex lists the patent family members relating to the patent documents cited in the above-mentioned European search report.
The members are as contained in the European Patent Office EDP file on
The European Patent Office is in no way liable for these particulars which are merely given for the purpose of information.

13-06-2024

| Patent document cited in search report | | Publication date | Patent family member(s) | Publication date |
|---|---|---|---|---|
| CN 117540012 | A | 09-02-2024 | NONE | |
| CN 117520507 | A | 06-02-2024 | NONE | |
| CN 117494814 | A | 02-02-2024 | NONE | |

EPO FORM P0459

For more details about this annex : see Official Journal of the European Patent Office, No. 12/82